# EUROPÄISCHE PATENTSCHRIFT

(11) **EP 4 366 888 B1**
(45) Veröffentlichungstag und Bekanntmachung des Hinweises auf die Patenterteilung: **22.10.2025**
(21) Anmeldenummer: 22741497.6
(22) Anmeldetag: 05.07.2022
(51) Int. Cl.: B05B 7/14, B65G 49/08, B65G 53/28, F04B 53/10, F04B 53/20, F16K 7/07

(54) **PULVERDICHTSTROMPUMPE MIT QUETSCHVENTIL SOWIE QUETSCHVENTIL**
DENSE-PHASE POWDER PUMP HAVING A PINCH VALVE, AND PINCH VALVE
POMPE À POUDRE EN PHASE DENSE AYANT UNE VANNE À MANCHON, ET VANNE À MANCHON

(30) Priorität: 09.07.2021 DE 102021117797
(43) Veröffentlichungstag der Anmeldung: 15.05.2024
(73) Patentinhaber: Gema Switzerland GmbH, 9200 Gossau (CH)
(72) Erfinder: TOBLER, Roger, 9200 Gossau (CH); SANWALD, Marco, 9030 Abtwil (CH)
(74) Vertreter: Meissner Bolte Partnerschaft mbB
(86) Internationale Anmeldenummer: PCT/EP2022/068611
(87) Internationale Veröffentlichungsnummer: WO 2023/280868

(56) Entgegenhaltungen:
- EP-A2- 1 857 384
- DE-A1- 102013 211 550
- DE-A1- 102017 103 487
- DE-A1- 102018 222 083
- DE-B3- 102007 006 764
- DE-B3- 102018 204 554
- DE-T5- 112023 000 414
- DE-U1- 202006 015 697

## Beschreibung

Die vorliegende Erfindung betrifft eine Pulverdichtstrompumpe nach dem Oberbegriff des unabhängigen Patentanspruchs 1, und ein Quetschventil nach dem Oberbegriff des unabhängigen Patentanspruchs 13.

Demgemäß betrifft die Erfindung eine Pulverdichtstrompumpe zum Fördern von pulverigen Materialien, insbesondere Beschichtungspulver, wobei die Pulverdichtstrompumpe mindestens eine Pulverförderkammer mit einem zumindest bereichsweise in einem Mantelkörper oder Mantelrohr aufgenommenen (gasdurchlässigen) Filterelement und mindestens ein an einem Endbereich der Pulverförderkammer angeschlossenes oder anschließbares Quetschventil aufweist.

Insbesondere weist die Pulverdichtstrompumpe ein erstes an dem ansaugseitigen Endbereich der Pulverförderkammer angeschlossenes Quetschventil und ein zweites an dem förderseitigen Endbereich der Pulverförderkammer angeschlossenes Quetschventil auf. Die Pulverförderkammer weist mindestens einen Anschluss auf zum abwechselnden Anlegen eines Überdruckes und eines Unterdruckes in der Pulverförderkammer.

Eine derartige Pulverdichtstrompumpe ist dem Prinzip nach aus dem Stand der Technik bekannt. Beispielsweise beschreibt die Druckschrift EP 1 551 558 A1 eine Pulverdichtstrompumpe, welche eine erste Pulverförderkammer und eine parallel zur ersten Pulverförderkammer angeordnete zweite Pulverförderkammer aufweist. Die Pulverförderkammern der aus diesem Stand der Technik bekannten Pumpe sind sowohl ansaugseitig als auch förderseitig jeweils durch eine mechanisch betätigte Quetschventilanordnung begrenzt.

Im Einzelnen ist dabei vorgesehen, dass im ansaugseitigen bzw. förderseitigen Bereich der Pulverpumpe die mit den jeweiligen Pulverförderkammern verbundenen Pulverschläuche mit einem mechanisch betätigten Stempel deformierbar sind, um bei Bedarf den Schlauchabschnitt abzuquetschen bzw. zu öffnen. Die Pulverförderkammern der aus diesem Stand der Technik bekannten Pumpe weisen ein gasdurchlässiges Filterelement auf. Über einen Vakuumanschluss wird in der Pulverförderkammer ein Unterdruck erzeugt, infolgedessen über den ansaugseitigen Endbereich der Pulverförderkammer Beschichtungspulver in die Pulverförderkammer eingesaugt wird. Anschließend wird das am ansaugseitigen Endbereich der Pulverförderkammer vorgesehene Quetschventil geschlossen und das am förderseitigen Endbereich der Pulverförderkammer vorgesehene Quetschventil geöffnet. Durch das Anliegen eines Überdruckes in der Pulverförderkammer wird das zuvor in die Pulverförderkammer eingesaugte Beschichtungspulver wieder aus der Pulverförderkammer über den förderseitigen Endbereich ausgestoßen.

Diese aus dem Stand der Technik bekannte Pulverpumpe weist im praktischen Gebrauch verschiedene Nachteile auf. Insbesondere ist es mit der in diesem Stand der Technik vorgeschlagenen Konstruktion nur mit relativ hohem Aufwand möglich, ein ggf. verstopftes Filterelement oder ein defektes Quetschventil auszutauschen. Insbesondere erlaubt es die aus diesem Stand der Technik bekannte Lösung nicht, ein Filterelement auszutauschen, ohne dass in den Aufbau der Quetschventile eingegriffen wird. Somit besteht die Gefahr, dass nach einer Wartung bzw. dem Austausch des Filterelements Leckagen auftreten, und die sichere Funktionsweise der Pulverpumpe nicht mehr gewährleistet ist.

Auch andere aus dem Stand der Technik bekannte Pulverdichtstrompumpen der zuvor genannten Art weisen den Nachteil auf, dass diese nur mit relativ hohem Aufwand gewartet werden können. Insbesondere ist das Austauschen der Quetschventile der bekannten Pulverdichtstrompumpen relativ aufwendig.

Durch die Erfindung soll die Aufgabe gelöst werden, eine Pulverdichtstrompumpe der eingangs genannten Art dahingehend weiterzubilden, dass diese bzw. Komponenten der Pulverdichtstrompumpe, insbesondere ein Quetschventil, möglichst einfach ausgetauscht oder gewartet werden können.

Die Druckschrift DE 10 2018 222 083 A1 betrifft ein Quetschventil mit einem formstabilen Ventilgehäuse, welches von einer Arbeitsausnehmung durchsetzt ist, die sich längs einer Erstreckungsachse erstreckt, sowie mit einem in der Arbeitsausnehmung aufgenommenen, aus einem gummielastischen Material hergestellten und von einem fluidkanaldurchsetzten Ventilschlauch, der zwischen einem Eingangsanschluss und einem Ausgangsanschluss der Arbeitsausnehmung erstreckt ist, und der mit der Arbeitsausnehmung in einen fluiddichten, druckbeaufschlagbaren und größenvariablen Arbeitsraum begrenzt.

Insbesondere betrifft dieser Stand der Technik ein Quetschventil gemäß dem Oberbegriff des unabhängigen Patentanspruchs 13.

Die Druckschrift DE 10 2017 103 487 A1 betrifft eine Pulverdichtstrompumpe zum Fördern von Beschichtungspulver von einem ersten Pulverreservoir zu einem zweiten stromabwärts angeordneten Pulverreservoir oder einer stromabwärts angeordneten Pulversprühbeschichtungspistole oder der gleichen Einrichtung zum Versprühen von Beschichtungspulver.

Insbesondere betrifft dieser Stand der Technik eine Pulverdichtstrompumpe gemäß dem Oberbegriff des unabhängigen Patentanspruchs 1.

Die Druckschrift DE 10 2007 006 764 B3 betrifft ein Quetschventil, mit einem Ventilgehäuse, in welchem eine patronenartige Baueinheit lösbar eingesetzt ist, die ein schlauchförmiges Ventilglied und ein, um dieses herum angeordnetes Stützrohr aufweist.

Die Druckschrift EP 1 857 384 A2 betrifft eine zwei-Kammer-Pulverdichtstrompumpe.

Auf Grundlage dieser Probleme liegt somit der vorliegenden Erfindung die Aufgabe zu Grunde, eine Pulverdichtstrompumpe der eingangs genannten Art dahingehend weiterzubilden, dass diese mit relativ geringem Aufwand gewartet werden kann, wobei insbesondere ein Quetschventil der Pulverdichtstrompumpe ohne die Gefahr einer Beeinträchtigung der Funktionsweise der Pulverdichtstrompumpe in einer leicht zu realisierenden Weise ausgetauscht werden kann.

Die der Erfindung zu Grunde liegende Aufgabe wird durch den jeweiligen Gegenstand der unabhängigen Patentansprüche 1 und 13 gelöst.

Demgemäß betrifft die Erfindung eine Pulverdichtstrompumpe, welche eine Pulverförderkammer mit einem vorzugsweise zylinderförmigen und insbesondere kreiszylinderförmigen Mantelrohr und einem im Inneren des Mantelrohrs angeordneten gasdurchlässigen Filterelement aufweist, wobei ferner ein erstes an dem ansaugseitigen Endbereich der Pulverförderkammer angeschlossenes Quetschventil und ein zweites an dem förderseitigen Endbereich der Pulverförderkammer angeschlossenes Quetschventil vorgesehen sind. Die Pulverkammer weist mindestens einen Anschluss auf zum abwechselnden Anlegen eines Überdrucks und eines Unterdrucks in der Pulverförderkammer.

Das mindestens eine erste oder zweite Quetschventil weist ein zumindest bereichsweise schlauchförmiges Ventilelement auf, dessen Umfangswand quer zur Ventilelement-Längsachse zusammenquetschbar ist, um den Durchflussquerschnitt zu verändern. Das mindestens eine Quetschventil weist ferner eine vorzugsweise zumindest im Wesentlichen rohrförmige Stützstruktur auf, in welcher das Ventilelement zumindest bereichsweise aufgenommen ist. Die Stützstruktur besteht aus mehreren in der Umfangsrichtung der Umfangswand herum aneinandergereihten, jeweils einen bogenförmigen Querschnitt aufweisenden Schalenelementen, die in bezüglich der Ventilelement-Längsachse radialer Richtung außen an das Ventilelement angesetzt sind.

Durch das Vorsehen der Stützstruktur ist sichergestellt, dass das Ventilelement ohne Beeinträchtigung seiner Abstützung einfach installierbar ist. Beim Zusammenbau des Quetschventils erhebt sich eine kartuschen- oder patronenartige Baueinheit, in Folge dessen sich ein aufwendiges Einstecken des Ventilelements in eine Stützstruktur erübrigt. Stattdessen können die einzelnen Schalenelemente der Stützstruktur von radial außen her an das schlauchförmige Ventilelement angesetzt werden, um somit die, in ihrer Umfangsrichtung segmentierte Stützstruktur zu bilden. Nach wie vor besteht die Möglichkeit, die aus den Schalenelementen und dem Ventilelement zusammengesetzte kartuschen- oder patronenartige Baueinheit axial in ein Ventilgehäuse einzuführen und bei Bedarf auch wieder zu entnehmen. Durch die Segmentierung der Stützstruktur besteht bei lösbarer Anbringung der Schalenelemente über dies der Vorteil, dass ein verschlissenes Ventilelement leicht ausgewechselt werden kann, während die Schalenelemente wiederverwendbar sind.

Gemäß Weiterbildungen der vorliegenden Erfindung besteht die Stützstruktur aus genau zwei Schalenelementen, die jeweils eine Bogenerstreckung von 180° aufweisen. Es handelt sich hierbei insbesondere um identische Bauteile, so dass eine kostensparende Herstellung möglich ist.

Die beiden Schalenelemente weisen vorzugsweise mindestens ein erstes Rastmittel und mindestens ein zweites, zu dem ersten Rastmittel komplementär ausgeführtes Rastmittel auf, über welche die beiden Schalenelemente zum Ausbilden der Stützstruktur formschlüssig und insbesondere lösbar verbindbar sind. Bei den Rastmitteln handelt es sich insbesondere um Rastmittel, die das Ausbilden einer Clipsverbindung ermöglichen.

In einer Weiterbildung des zuletzt genannten Aspekts sind das mindestens eine erste Rastmittel und das mindestens eine zweite Rastmittel derart an den beiden Schalenelementen ausgebildet, dass die beiden Schalenelemente nur in einer vorab festgelegten Ausrichtung zueinander miteinander verbindbar sind. Durch diese Anordnung des mindestens einen ersten Rastmittels und des mindestens einen zweiten Rastmittels wird eine Vorkehrung zur sofortigen Fehleraufdeckung bzw. Fehlerverhinderung insbesondere nach dem Poka-Yoke-Prinzip geschaffen.

Bei der erfindungsgemäßen Pulverdichtstrompumpe ist vorgesehen, dass zumindest in einem miteinander verbundenen Zustand der Schalenelemente die Stützstruktur eine insbesondere schlitzförmige Öffnung aufweist, durch die hindurch Druckluft als Quetschmittel auf die Umfangswand des Ventilelements einwirken kann, um die Umfangswand des Ventilelements zur Verringerung des zur Verfügung gestellten Durchflussquerschnitts zusammen zu quetschen. Gemäß Realisierungen ist dabei vorgesehen, dass die mindestens eine vorzugsweise schlitzförmige Öffnung in einem Bereich zwischen den beiden Schalenelementen beim Zusammenbau der kartuschen- bzw. patronenartigen Baueinheit gebildet wird.

Gemäß Realisierungen der erfindungsgemäßen Pulverdichtstrompumpe ist vorgesehen, dass die mehreren Schalenelemente jeweils über einen Filmscharnierbereich miteinander verbunden sind. Dies vereinfacht die Handhabung und den Zusammenbau des Quetschventils. Darüber hinaus erlaubt diese Ausführungsform, dass die Schalenelemente in einem einzigen Spritzgussvorgang gebildet werden. Selbstverständlich kommen aber auch andere Ausführungsformen in Frage.

Insbesondere wenn der Aufnahmekanal der Stützstruktur und/oder die Umfangswand des Ventilelements eine nicht kreisförmige Querschnittskontur aufweisen/aufweist, empfiehlt sich die Realisierung von Positionsvorgabemitteln an zum einen den Schalenelementen und zum anderen an dem Ventilelement, die beim Ansetzen der Schalenelemente derart formschlüssig ineinandergreifen, dass in der Umfangsrichtung der Ventilelement-Längsachse eine vorbestimmte Relativposition zwischen diesen Komponenten eingenommen wird.

Vorteilhaft ist dies insbesondere dann, wenn der Aufnahmekanal der Stützstruktur und/oder die Umfangswand über einen länglichen Querschnitt verfügen, so dass eine gegenseitige Abstimmung der Drehposition vorteilhaft ist. Die längliche Querschnittsform der Umfangswand hat den Vorteil, dass bei der externen Fluidbeaufschlagung der Umfangswand des Ventilelements ein Zusammenquetschen in einer Vorzugsrichtung stattfindet, quer zu Querschnitts-Längsachse. Dadurch kann der Durchflussquerschnitt besonders zuverlässig abgesperrt werden.

Gemäß Ausführungsformen der erfindungsgemäßen Pulverdichtstrompumpe ist vorgesehen, dass die Schalenelemente in axialer Richtung ein Übermaß bezüglich des lichten Abstands zweier endseitiger Flanschabschnitte des flexiblen Ventilelements aufweisen. Dadurch wird die Umfangswand des Ventilelements beim Zusammensetzen der kartuschen- bzw. patronenartigen Baueinheit axial gestreckt, was eine radial nach außen orientierte Vorspannung der Umfangswand zur Folge hat, so dass die Aufweitung der Umfangswand unterstützt wird, wenn momentan von außen her keine Quetschkräfte auf die Umfangswand des Ventilelements ausgeübt werden.

Beispielsweise ist es denkbar, dass das Ventilelement an mindestens einem seiner beiden Endbereiche und vorzugsweise an beiden Endbereichen jeweils einen radial abstehenden Flanschbereich aufweist, wobei die Stützstruktur axial zwischen den beiden Endbereichen des Ventilelements angeordnet ist und stirnseitig von diesen flankiert wird.

Um die Schalenelemente am Außenumfang des Ventilelements auf einfache Weise zu fixieren, ist vorzugsweise ein die segmentierte Stützstruktur umschließender Sicherungskörper vorhanden. Bei ihm handelt es sich insbesondere um ein bezüglich eines Ventilgehäuses separates Bauteil, das auch ein Bestandteil der kartuschen- oder patronenartigen Baueinheit sein kann. Zweckmäßig ist eine Ausgestaltung als die Stützstruktur koaxial umschließendes Sicherungsrohr, welches sich einfach aufstecken lässt, nachdem die Schalenelemente an das Ventilelement angesetzt wurden.

Der Sicherungskörper kann - wie die Stützstruktur - mindestens eine radiale Durchbrechung für ein die Umfangswand des Ventilelements beaufschlagendes Quetschmittel (insbesondere Druckluft) aufweisen.

Um möglichst einfach das Quetschventil mit der Pulverförderkammer der Pulverdichtstrompumpe verbinden zu können, ist gemäß Realisierungen der erfindungsgemäßen Pulverdichtstrompumpe vorgesehen, dass diese ferner ein an dem mindestens einen Endbereich der Pulverförderkammer angeordnetes Quetschventilgehäuse aufweist, welches lösbar mit dem Endbereich der Pulverförderkammer verbunden oder verbindbar ist. Das Quetschventilgehäuse ist derart ausgebildet, dass das Quetschventil austauschbar in dem Quetschventilgehäuse zumindest bereichsweise aufnehmbar ist.

Das Quetschventilgehäuse weist einen Anschluss auf, um ein Quetschmittel, insbesondere Druckluft dem Quetschventilgehäuse zuzuführen für die Betätigung des Quetschventils.

Gemäß Ausführungsformen der erfindungsgemäßen Pulverdichtstrompumpe ist vorgesehen, dass das Quetschventilgehäuse einen ersten Bereich zur insbesondere austauschbaren Aufnahme des Quetschventils und einen gegenüberliegenden zweiten Bereich aufweist, wobei diese Bereiche über einen Pulverförderkanal miteinander verbunden sind. Über den zweiten Bereich des Quetschventilgehäuses ist das Quetschventilgehäuse mit dem Mantelkörper der Pulverförderkammer insbesondere steckbar verbindbar. Auf diese Weise lässt sich ohne Aufwand das Quetschventilgehäuse von der Pulverförderkammer entfernen, um beispielsweise das Filterelement der Pulverförderkammer auszutauschen oder zu inspektieren. In gleicher Weise lässt sich das Quetschventil besonders einfach und in einer gut abdichtenden Weise mit dem Mantelkörper der Pulverförderkammer verbinden.

Das Quetschventilgehäuse ist vorzugsweise eine Komponente, die mit dem Mantelkörper der Pulverförderkammer lös- oder austauschbar verbindbar ist, insbesondere über eine Steckverbindung.

Der zweite Bereich des Quetschventilgehäuses ist ferner vorzugsweise ausgebildet, einen Endbereich des Filterelements der Pulverförderkammer aufzunehmen. Dadurch ist eine optimale Abdichtung realisierbar.

Um zu erreichen, dass die Pulverdichtstrompumpe einen möglichst kompakten Aufbau aufweist, während gleichzeitig Hinterschneidungen oder Kanten vermieden werden, in denen sich Pulver ablagern kann, ist vorgesehen, dass die Stützstruktur einen im Hinblick auf die Ventilelement-Längsachse radialen und mittleren Außendurchmesser aufweist, der zumindest im Wesentlichen dem im Hinblick auf die Filterelement-Längsachse radialen und mittleren Innendurchmesser des Filterelements entspricht. Insbesondere sollte sich der mittlere Außendurchmesser der Stützstruktur von dem mittleren Innendurchmesser des Filterelements vorzugsweise um weniger als 10% und noch bevorzugter um weniger als 5% unterscheiden.

Die Erfindung betrifft ferner ein Quetschventil insbesondere für eine Pulverdichtstrompumpe der zuvor beschriebenen erfindungsgemäßen Art, wobei das Quetschventil ein zumindest bereichsweise schlauchförmiges Ventilelement aufweist, dessen Umfangswand quer zur Ventilelement-Längsachse zusammenquetschbar ist, um den Durchflussquerschnitt zu verändern. Das Quetschventil weist ferner eine vorzugsweise zumindest im Wesentlichen rohrförmige Stützstruktur auf, in welcher das Ventilelement zumindest bereichsweise aufgenommen ist, wobei die Stützstruktur aus mehreren in der Umfangsrichtung der Umfangswand des Ventilelements, um die Umfangswand herum aneinander gereihten, jeweils einen bogenförmigen Querschnitt aufweisenden Schalenelementen besteht, die in bezüglich der Ventilelement-Längsachse radialer Richtung außen an das Ventilelement angesetzt sind.

Das erfindungsgemäße Quetschventil ist insbesondere als eine patronen- oder kartuschenartige Komponente ausgeführt, die als solche austauschbar in einem Quetschventilgehäuse aufgenommen oder aufnehmbar ist.

Nachfolgend wird unter Bezugnahme auf die beiliegenden Zeichnungen eine exemplarische Ausführungsform der Erfindung näher beschrieben.

Es zeigen:
- FIG. 1: schematisch und in einer isometrischen Ansicht eine exemplarische Ausführungsform der erfindungsgemäßen Pulverdichtstrompumpe mit zwei parallel zueinander angeordneten Pulverförderkammern;
- FIG. 2: schematisch und in einer Explosionsansicht die in FIG. 1 gezeigte exemplarische Ausführungsform der erfindungsgemäßen Pulverdichtstrompumpe;
- FIG. 3: schematisch und in einer Schnittansicht eine Pulverförderkammer der Pulverdichtstrompumpe gemäß FIG. 1;
- FIG. 4: schematisch und in einer Explosionsansicht ein Quetschventil der Pulverdichtstrompumpe gemäß FIG. 1; und
- FIG. 5: schematisch und in einer Stirnansicht das Quetschventil gemäß FIG. 4 im zusammengebauten Zustand.

Nachfolgend werden unter Bezugnahme auf die Zeichnungen der Aufbau und die Funktionsweise einer Pulverdichtstrompumpe 1 gemäß einer exemplarischen Ausführungsform der vorliegenden Erfindung beschrieben. Bei der exemplarischen Ausführungsform der erfindungsgemäßen Pulverdichtstrompumpe kommen zwei parallel zueinander angeordnete Pulverförderkammern 2, 2' zum Einsatz.

Jede der beiden parallel zueinander angeordneten Pulverförderkammern 2, 2' einen insbesondere zylinderförmigen Hauptkörperbereich 3 mit einem zumindest im Wesentlichen einheitlichen effektiven Strömungsquerschnitt auf. Jeder insbesondere zylinderförmige Hauptkörperbereich 3 der beiden Pulverförderkammern 2, 2' weist ein zylinderförmiges, insbesondere kreiszylinderförmiges Mantelrohr 4 und ein im Inneren des Mantelrohrs 4 aufgenommenes Filterelement 5 auf. Bei dem Filterelement 5 des Hauptkörperbereichs 3 der Pulverförderkammer 2, 2' handelt es sich insbesondere um ein zylinderförmiges Filterelement 5.

Jede Pulverförderkammer 2, 2' weist einen Pulvereinlass mit einem Pulvereinlassventil 6 und einen Pulverauslass mit einem Pulverauslassventil 7 auf. Die jeweiligen Pulvereinlassventile 6 werden im Folgenden auch als "erste Ventile" bzw. "ansaugseitige Ventile" bezeichnet. Die Pulverauslassventile 7 werden auch als "zweite Ventile" bzw. "förderseitige Ventile" bezeichnet.

An den jeweiligen ansaugseitigen und förderseitigen Endbereichen der Hauptkörperbereiche der Pulverförderkammern 2, 2' weisen diese einen Übergangsbereich 8 auf, der ausgebildet ist, einen effektiven Strömungsquerschnitt der Pulverförderkammer 2, 2' auf einen effektiven Strömungsquerschnitt der entsprechend angeschlossenen Pulverleitung 9 bzw. auf den effektiven Strömungsquerschnitt des zwischen der Pulverförderkammer 2, 2' und der Pulverleitung 9 angeordneten Ventils 6, 7 zu reduzieren. Der Übergangsbereich 8 ist dabei insbesondere zumindest bereichsweise als konusförmiger Bereich ausgeführt.

Die Übergangsbereiche 8 dienen dazu, die Nennweite des Hauptkörperbereichs 3 der Pulverförderkammer 2, 2', d.h. den inneren Durchmesser des Hauptkörperbereichs 3 der Pulverförderkammer 2, 2', auf die Nennweite der entsprechend angeschlossenen Pulverleitung 9 bzw. auf die Nennweite des zwischengeschalteten Ventils 6, 7 anzupassen/zu reduzieren.

Die Übergangsbereiche 8 weisen ein insbesondere konusförmiges Filterelement 10 auf, welches in einem Filtergehäuse 11 aufgenommen ist.

Während eines Ansaugprozesses wird in einer der Pulverförderkammern 2, 2' der Pulverdichtstrompumpe 1 ein Vakuum (Unterdruck) erzeugt. Der Unterdruck saugt das zu fördernde Pulver, insbesondere Beschichtungspulver, über den entsprechenden Pulvereinlass in die Pulverförderkammer 2, 2' ein. Das feinporöse Filterelement 5 in dem Hauptkörperbereich 3 der Pulverförderkammer 2, 2' scheidet das Pulver ab. Die Pulverförderkammer 2, 2' ist während des Ansaugprozesses an der Ansaugseite bzw. Förderseite durch das entsprechende förderseitige Ventil geschlossen.

Während des Förderprozesses hingegen wird das ansaugseitige Ventil 6 an der Pulvereinlassseite der Pulverförderkammer 2, 2' geschlossen, während das förderseitige Ventil 7 geöffnet wird. Das zuvor während des Ansaugprozesses in die Pulverförderkammer 2, 2' eingesaugte Beschichtungspulver wird dann mittels Überdruck, das mit Druckluft durch das feinporöse Filterelement 5 des Hauptkörperbereichs 3 der Pulverförderkammer 2, 2' aufgebaut wird, aus der Pulverförderkammer 2, 2' gepresst und weiterbefördert.

Der Ansaug- und Förderprozess alterniert zwischen den beiden parallel zueinander angeordneten Pulverförderkammern 2, 2'. Mit anderen Worten, die beiden parallel zueinander angeordneten Pulverförderkammern 2, 2' werden gegenphasig betrieben.

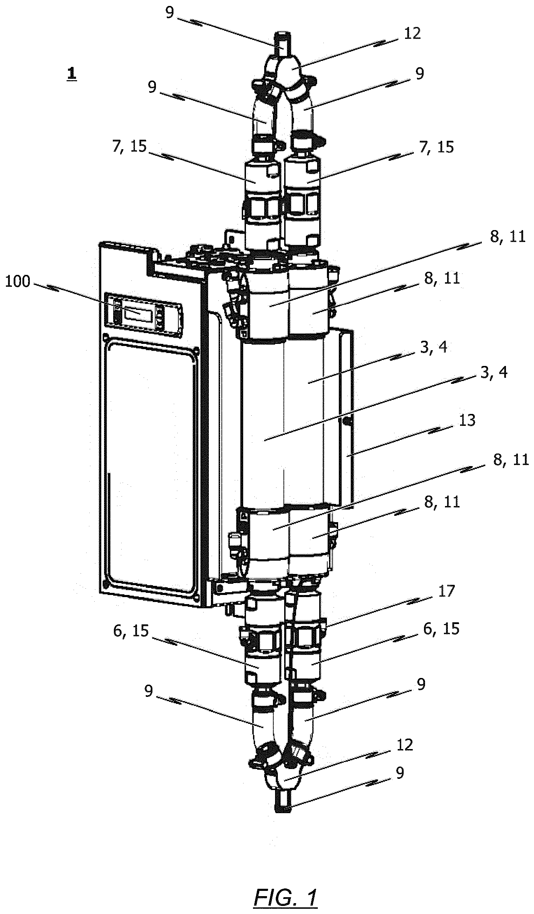

FIG. 1 zeigt in einer isometrischen Ansicht den Aufbau einer Pulverdichtstrompumpe 1 mit zwei parallel zueinander angeordneten Pulverförderkammern 2, 2' gemäß einer exemplarischen Ausführungsform der vorliegenden Erfindung. Die Pulverdichtstrompumpe 1 weist zwei Pulverförderkammern 2, 2' auf, wobei jede der beiden Pulverförderkammern 2, 2' einen zylinderförmigen Hauptkörperbereich 3 mit einem zylinderförmigen und insbesondere kreiszylinderförmigen Mantelrohr 4 und einem im Inneren des Mantelrohrs 4 angeordneten gasdurchlässigen Filterelement 5 aufweist. Das Filterelement 5 ist vorzugsweise ein steifer Körper aus Sintermaterial, vorzugsweise aus gesintertem Metall, zum Beispiel Bronze oder Aluminium, oder aus gesintertem Kunststoff oder einer gesinterten Materialmischung.

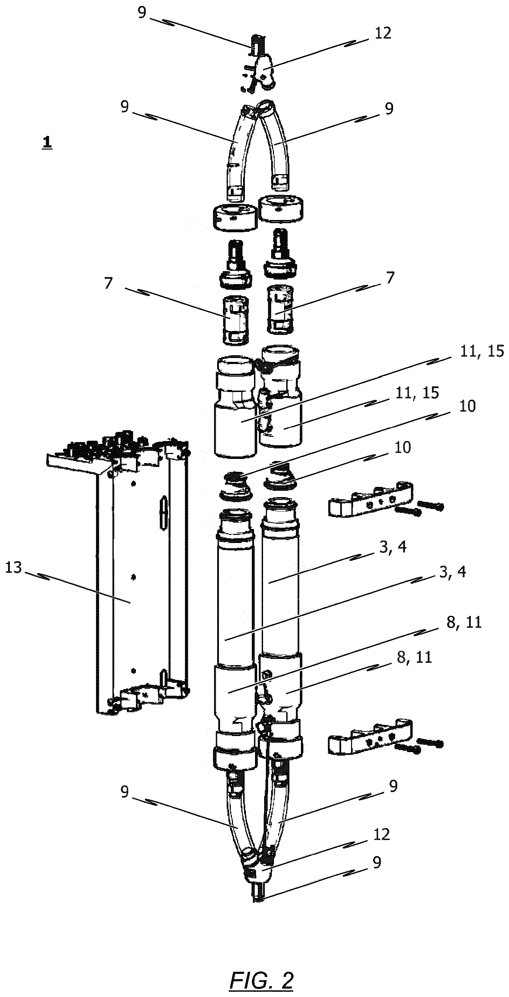

Wie es insbesondere der in FIG. 2 gezeigten Explosionsdarstellung entnommen werden kann, weist der Hauptkörperbereich 3 einer jeden Pulverförderkammer 2, 2' ansaugseitig und förderseitig einen mit dem Hauptkörperbereich 3 lösbar verbundenen oder verbindbaren Übergangsbereich 8 auf, der Teil der Pulverförderkammer 2, 2' ist. Der Übergangsbereich 8 dient dazu, die Nennweite des Hauptkörperbereichs 3 der Pulverförderkammer 2, 2' auf die Nennweite eines ansaugseitigen bzw. förderseitigen Ventils 6, 7 anzupassen/zu reduzieren.

Um hierzu die Nennweite, d.h. den inneren Durchmesser des zylinderförmigen Hauptkörperbereichs 3 der Pulverförderkammer 2, 2', entsprechend auf die (reduzierte) Nennweite des entsprechenden Ventils 6, 7 bzw. der entsprechenden Pulverleitung 9 zu reduzieren, weist jeder Übergangsbereich 8 ein sich insbesondere konisch in Richtung des Ventils 6, 7 bzw. in Richtung der Förderleitung verjüngendes Filterelement 10 auf.

Das Filterelement 10 ist - wie auch das Filterelement 5 des Hauptkörperbereichs 3 - vorzugsweise ein steifer Körper insbesondere aus Sintermaterial, vorzugsweise aus gesintertem Metall, zum Beispiel Bronze oder Aluminium, oder aus gesintertem Kunststoff oder einer gesinterten Materialmischung. Selbstverständlich kommen aber auch andere Ausführungsformen für das sich konisch in Richtung des jeweiligen Ventils 6, 7 verjüngenden Filterelements 10 des Übergangsbereichs 8 in Frage.

Das sich konisch in Richtung des entsprechenden Ventils 6, 7 verjüngende Filterelement 10 definiert den effektiven Strömungsquerschnitt des Übergangsbereichs 8, um die Nennweite des Hauptkörperbereichs 3 der Pulverförderkammer 2, 2' entsprechend an die Nennweite des an dem jeweiligen Endbereich der Pulverförderkammer 2, 2' angeschlossenen Ventils 6, 7 anzupassen.

Wie es der Explosionsdarstellung in FIG. 2 entnommen werden kann, ist das jeweilige sich konisch verjüngende Filterelement 10 des Übergangsbereichs 8 lösbar mit dem entsprechenden Endbereich des Hauptkörperbereichs 3 der Pulverförderkammer 2, 2' verbunden, insbesondere über eine mit Hilfe einer Schraubverbindung oder mit Hilfe einer anderen lösbaren Verbindung, beispielsweise mit Hilfe eines Bajonettverschlusses, fixierbare Steckverbindung verbindbar.

Jeder Übergangsbereich 8 weist ferner ein entsprechendes Filtergehäuse 11 auf, in welchem das sich konisch verjüngende Filterelement 10 aufnehmbar ist. Zwischen dem Innenbereich des Filtergehäuses 11 und dem Außenbereich des sich konisch verjüngenden Filterelements 10 ist ein Luftraum gebildet, der über eine entsprechende Luftleitung bedarfsweise mit Überdruck beaufschlagbar ist.

An dem Pulvereinlass einer jeden Pulverförderkammer 2, 2' der in FIG. 1 und FIG. 2 schematisch gezeigten Pulverdichtstrompumpe 1 ist jeweils ein erstes an dem ansaugseitigen Endbereich der Pulverförderkammer 2, 2' angeschlossenes Quetschventil 6 vorgesehen. Ein zweites Quetschventil 7 ist an dem jeweiligen förderseitigen Endbereich der Pulverförderkammer 2, 2', d.h. an dem förderseitigen Endbereich des Übergangsbereichs 8 der Pulverförderkammer 2, 2' angeschlossen.

Die Pulvereinlassseite der beiden ersten (ansaugseitigen) Ventile 6 sind bei der dargestellten Ausführungsform über Zufuhrleitungszweige eines Y-Verbindungsstücks 12 mit einer Pulverzuleitung 9 verbunden, welche beispielsweise zu einem Pulverbehälter (in den Zeichnungen nicht dargestellt) führt. Hierzu werden Schlauchverbinder verwendet, um die Pulvereinlassseite der beiden ersten Ventile 6 (Quetschventile) mit den Zufuhrleitungszweigen des Y-Verbindungsstücks 12 zu verbinden.

Denkbar ist es allerdings auch, dass an Stelle eines Y-Verbindungsstücks 12 die jeweiligen Pulvereinlassseiten der ersten (ansaugseitigen) Ventile/Quetschventile 6 über getrennte Pulverzufuhrleitungen mit einem oder mit zwei verschiedenen Pulverbehältern strömungsmäßig verbunden sind.

Die Pulverauslässe der beiden zweiten (förderseitigen) Ventil/Quetschventile 7 sind bei der dargestellten Ausführungsform durch Abgabeleitungszweige, beispielsweise ebenfalls eines Y-förmigen Leitungsverbindungsstücks 12, mit einem Ende eines Pulverabgabeschlauchs 9 verbunden, dessen anderes Ende in einen weiteren (nicht dargestellten) Pulverbehälter mündet. Die Pulverabgabeleitung kann eine steife Rohrleitung sein, ist jedoch vorzugsweise ein flexibler Schlauch.

Bei der in FIG. 1 und FIG. 2 dargestellten Ausführungsform sind die Pulverförderkammern 2, 2' jeweils in einer Halterung 13 aufgenommen und dort arretiert. Die Pulverförderkammern 2, 2' sind insbesondere mit Hilfe einer lösbaren Schraub- oder Bajonettverbindung mit der Halterung 13 verbunden.

Bei der in den Zeichnungen gezeigten exemplarischen Ausführungsform der erfindungsgemäßen Pulverdichtstrompumpe 1 ist jedes erste und zweite Ventil 6, 7 als Quetschventil ausgeführt, wobei jedem Quetschventil 6, 7 ein elastisch verformbares Ventilelement 14 zugeordnet ist, das im Inneren eines entsprechenden Quetschventilgehäuses 15 derart angeordnet ist, dass der Einlass des Quetschventils 6, 7 mit dem Auslass des Quetschventils 6, 7 über das als elastisch verformbares Ventilelement 14 gebildete Ventilelement in Fluidverbindung bringbar ist.

Das Quetschventilgehäuse 15 weist einen Anschluss 17 auf, um bedarfsweise Druckluft in den zwischen der Innenwand des Quetschventilgehäuses 15 und den im Inneren des Quetschventilgehäuses 15 angeordneten Ventilelement 14 gebildeten Raums zuzuführen. Bei Zufuhr von Druckluft wird das Ventilelement 14 elastisch verformt, so dass die Fluidverbindung zwischen dem Einlass und dem Auslass des Quetschventils 6, 7 unterbrochen ist. Liegt hingegen keine Druckluft in dem Zwischenraum zwischen der Innenwand des Quetschventilgehäuses 15 und dem im Inneren des Quetschventilgehäuses 15 angeordneten Ventilelements 14 vor, geht das zuvor elastisch verformte Ventilelement 14 wieder in seinen Ausgangszustand über, in welchem eine Fluidverbindung zwischen dem Einlass und dem Auslass des Quetschventilgehäuses 15 vorliegt.

Über den mindestens einen Anschluss des Quetschventils 6, 7 kann auch ein Vakuumanschluss angeschlossen werden, um zum raschen Öffnen des Quetschventils die in dem Zwischenraum zuvor eingebrachte Druckluft zu evakuieren.

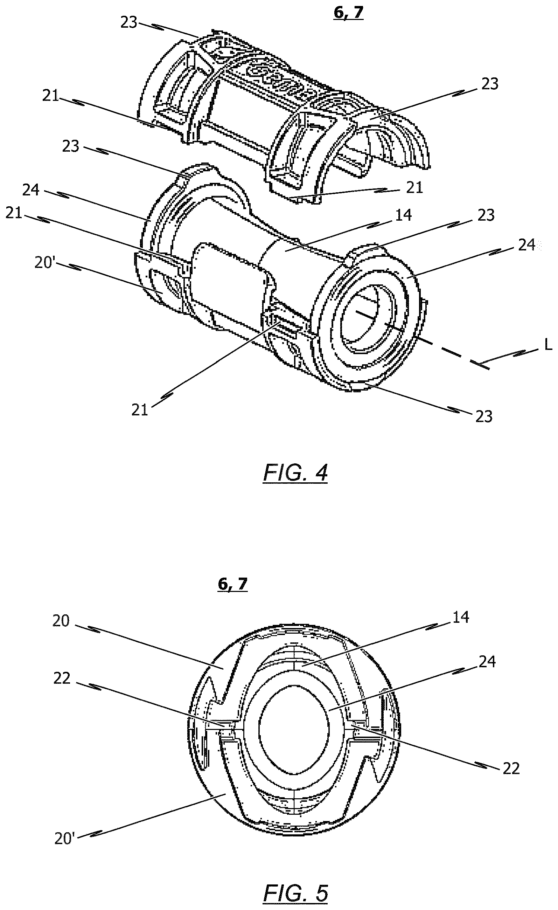

Nachfolgend wird unter Bezugnahme auf die Darstellungen insbesondere in FIG. 4 und FIG. 5 der Aufbau des bei der erfindungsgemäßen Pulverdichtstrompumpe 1 zum Einsatz kommenden Quetschventils 6, 7 näher beschrieben.

Wie dargestellt, weist das Quetschventil 6, 7 ein zumindest bereichsweise schlauchförmiges Ventilelement 14 auf, dessen Umfangswand quer zur Ventilelement-Längsachse L zusammenquetschbar ist, um den Durchflussquerschnitt zu verändern.

Das Quetschventil 6, 7 weist ferner eine zumindest im Wesentlichen rohrförmige Stützstruktur 19 auf, in welcher das Ventilelement 14 zumindest bereichsweise aufgenommen ist. Die Stützstruktur 19 besteht aus zwei in der Umfangsrichtung der Umfangswand des Ventilelements 14 um die Umfangswand herum aneinander gereihte jeweils einen bogenförmigen Querschnitt aufweisende Schalenelemente 20, 20', die in bezüglich der Ventilelement-Längsachse L radialer Richtung außen an das Ventilelement 14 angesetzt sind.

Die beiden Schalenelemente 20, 20' der Stützstruktur 19 weisen jeweils eine Bogenerstreckung von 180° auf. Des Weiteren weisen die beiden Schalenelemente 20, 20' erste und zweite Rastmittel 21 auf, über welche die beiden Schalenelemente 20, 20' zum Ausbilden der Stützstruktur 19 formschlüssig und insbesondere lösbar miteinander verbindbar sind.

Wie es der Darstellung in FIG. 5 insbesondere entnommen werden kann, weist zumindest in einem miteinander verbundenen Zustand der Schalenelemente 20, 20' die Stützstruktur 19 schlitzförmige Öffnungen 22 auf, durch die hindurch Druckluft als Quetschmittel auf die Umfangswand des Ventilelements 14 einwirken kann, um die Umfangswand des Ventilelements 14 zur Verringerung des zur Verfügung gestellten Durchflussquerschnitts zusammen zu quetschen.

Der Explosionsdarstellung gemäß FIG. 4 kann entnommen werden, dass an den Schalenelementen 20, 20' und dem Ventilelement 14 formschlüssig ineinandergreifende Positionsvorgabemittel 23 angeordnet sind, welche ausgebildet sind, eine in der Umfangsrichtung bezüglich des Ventilelements 14 eingenommene oder einzunehmende Umfangsposition der Schalenelemente 20, 20' vorzugeben.

Das Ventilelement 14 weist an seinen beiden Endbereichen jeweils einen radial abstehenden Flanschbereich 24 auf. Die Stützstruktur 19 ist axial zwischen den beiden Endbereichen des Ventilelements 14 angeordnet und wird stirnseitig von diesen flankiert.

Zurückkommend auf die Darstellungen in FIG. 1, FIG. 2 und FIG. 3 ist anzumerken, dass die Pulverdichtstrompumpe 1 ein an den jeweiligen Endbereichen der Pulverförderkammer 2, 2' angeordnetes Quetschventilgehäuse 15 aufweist, welches lösbar mit dem entsprechenden Endbereich der Pulverförderkammer 2, 2' verbunden oder verbindbar ist. Das jeweilige Quetschventilgehäuse 15 ist ausgebildet, das Quetschventil 6, 7, welches als eine patronen- oder kartuschenartige Komponente ausgeführt ist, austauschbar aufzunehmen.

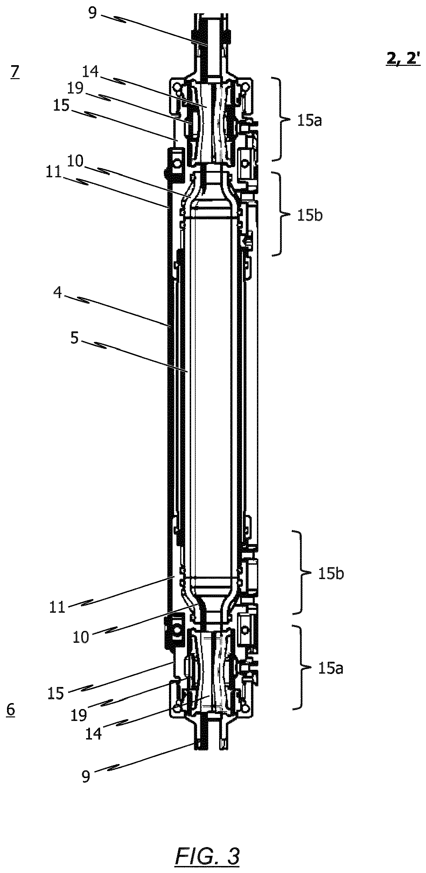

Der Schnittansicht in FIG. 3 kann entnommen werden, dass das Quetschventilgehäuse 15 einen ersten Bereich 15a zur insbesondere austauschbaren Aufnahme des Quetschventils 6, 7 und einen gegenüberliegenden zweiten Bereich 15b aufweist, über den das Quetschventilgehäuse 15 mit dem Mantelkörper 4 der Pulverförderkammer 2, 2' insbesondere steckbar verbindbar ist. Insbesondere ist das Quetschventilgehäuse 15 eine Komponente, die mit dem Mantelkörper 4 der Pulverförderkammer 2, 2' lös- oder austauschbar verbindbar ist.

Der zweite Bereich 15 b des Quetschventilgehäuses 15 ist ausgebildet, einen Endbereich des Filterelements 5 der Pulverförderkammer 2, 2' aufzunehmen.

Im Einzelnen ist bei der in den Zeichnungen dargestellten exemplarischen Ausführungsform der erfindungsgemäßen Pulverdichtstrompumpe 1 vorgesehen, dass die Stützstruktur 19 des Quetschventils 6, 7 einen im Hinblick auf die Ventilelement-Längsachse L radialen und mittleren Außendurchmesser aufweist, der zumindest im Wesentlichen dem im Hinblick auf die Filterelement-Längsachse radialen und mittleren Innendurchmesser des Filterelements 5 entspricht, wobei sich der mittlere Außendurchmesser der Stützstruktur 19 von dem mittleren Innendurchmesser des Filterelements vorzugsweise um weniger als 10% und noch bevorzugter um weniger als 5% unterscheidet.

Insbesondere ist das Quetschventil 6, 7 als eine patronen- oder kartuschenartige Komponente ausgeführt, die als solche austauschbar in einem Quetschventilgehäuse 15 der Pulverdichtstrompumpe 1 aufgenommen oder aufnehmbar ist. Das Quetschventilgehäuse 15 umgibt einen Aufnahmeraum. Bevorzugt umfasst das Quetschventilgehäuse 15 einen ersten rohrförmigen Bereich 15a und einen über einen Fluidkanal bzw. Pulverförderkanal mit dem ersten Bereich 15a verbundenen zweiten Bereich 15b. Das Quetschventilgehäuse 15 ist lösbar mit der Pulverförderkammer 2, 2' verbunden. Es ist mit einem Fluidanschluss ausgestattet, der von einem axialen Durchgangskanal gebildet ist. Über den Fluidanschluss ist ein das Quetschventil 6, 7 steuerndes Druckmittel zuführbar.

### Bezugszeichenliste

- 1: Pulverdichtstrompumpe
- 2, 2': Pulverförderkammer
- 3: Hauptkörperbereich
- 4: Mantelrohr
- 5: Filterelement
- 6: Pulvereinlassventil
- 7: Pulverauslassventil
- 8: Übergangsbereich
- 9: Pulverleitung
- 10: konusförmiges Filterelement
- 11: Filtergehäuse
- 12: Y-Verbindungsstück
- 13: Halterung
- 14: Ventilelement (Quetschventil)
- 15: Quetschventilgehäuse
- 15a: erster Bereich des Quetschventilgehäuses
- 15b: zweiter Bereich des Quetschventilgehäuses
- 17: Anschluss am Quetschventilgehäuse
- 19: Stützstruktur
- 20, 20': Schalenelement
- 21: Rastmitte
- 22: Öffnung
- 23: Positionsvorgabemittel
- 24: Flanschbereich

- L: Ventilelement-Längsachse

## Patentansprüche

1. Pulverdichtstrompumpe (1) zum Fördern von pulverigen Materialien, insbesondere Beschichtungspulver, wobei die Pulverdichtstrompumpe (1) mindestens eine Pulverförderkammer (2, 2') mit einem zumindest bereichsweise in einem Mantelkörper (4) aufgenommenen Filterelement (5) und mindestens ein an einem Endbereich der Pulverförderkammer (2, 2') angeschlossenes oder anschließbares Quetschventil (6, 7) aufweist,
**dadurch gekennzeichnet, dass**
das Quetschventil (6, 7) ein zumindest bereichsweise schlauchförmiges Ventilelement (14) aufweist, dessen Umfangswand quer zur Ventilelement-Längsachse (L) zusammenquetschbar ist, um den Durchflussquerschnitt zu verändern, und ferner eine vorzugsweise zumindest im Wesentlichen rohrförmige Stützstruktur (19) aufweist, in welcher das Ventilelement (14) zumindest bereichsweise aufgenommen ist, wobei die Stützstruktur (19) aus mehreren in der Umfangsrichtung der Umfangswand des Ventilelements (14), um die Umfangswand herum aneinandergereihten, jeweils einen bogenförmigen Querschnitt aufweisenden Schalenelementen (20, 20') besteht, die in bezüglich der Ventilelement-Längsachse (L) radialer Richtung außen an das Ventilelement (14) angesetzt sind, wobei zumindest in einem miteinander verbundenen Zustand der Schalenelemente (20, 20') die Stützstruktur (19) zwischen zwei aneinander angrenzenden Schalenelementen (20, 20') jeweils eine schlitzförmige Öffnung (22) aufweist, durch die hindurch Druckluft als Quetschmittel auf die Umfangswand des Ventilelements (14) einwirken kann, um die Umfangswand des Ventilelements (14) zur Verringerung des zur Verfügung gestellten Durchflussquerschnitts zusammen zu quetschen.

2. Pulverdichtstrompumpe (1) nach Anspruch 1,
wobei die Stützstruktur (19) aus genau zwei Schalenelementen (20, 20') besteht, die jeweils eine Bogenerstreckung von 180° aufweisen, wobei die beiden Schalenelemente (20, 20') mindestens ein erstes Rastmittel (21) und mindestens ein zweites, zu dem ersten Rastmittel (21) komplementär ausgeführtes Rastmittel (21) aufweisen, über welche die beiden Schalenelemente (20, 20') zum Ausbilden der Stützstruktur (19) formschlüssig und insbesondere lösbar verbindbar sind.

3. Pulverdichtstrompumpe (1) nach Anspruch 2,
wobei das mindestens eine erste Rastmittel (21) und das mindestens eine zweite Rastmittel (21) - insbesondere nach dem Poka-Yoke-Prinzip - derart an den beiden Schalenelementen (20, 20') ausgebildet sind, dass die beiden Schalenelemente (20, 20') nur in einer vorab festgelegten Ausrichtung zueinander miteinander verbindbar sind.

4. Pulverdichtstrompumpe (1) nach einem der Ansprüche 1 bis 3,
wobei die mehreren Schalenelemente (20, 20') jeweils über einen Filmscharnierbereich miteinander verbunden sind.

5. Pulverdichtstrompumpe (1) nach einem der Ansprüche 1 bis 4,
wobei an mindestens einem Schalenelement (20, 20') und dem Ventilelement (14) formschlüssig ineinandergreifende Positionsvorgabemittel (23) angeordnet sind, welche ausgebildet sind, eine in der Umfangsrichtung bezüglich des Ventilelements (14) eingenommene oder einzunehmende Umfangsposition der Schalenelemente (20, 20') vorzugeben.

6. Pulverdichtstrompumpe (1) nach einem der Ansprüche 1 bis 5,
wobei das Ventilelement (14) an mindestens einem seiner beiden Endbereiche und vorzugsweise an beiden Endbereichen jeweils einen radial abstehenden Flanschbereich (24) aufweist, wobei die Stützstruktur (19) axial zwischen den beiden Endbereichen des Ventilelements (14) angeordnet ist und stirnseitig von diesen flankiert wird.

7. Pulverdichtstrompumpe (1) nach einem der Ansprüche 1 bis 6,
wobei die Pulverdichtstrompumpe (1) ferner ein an dem mindestens einen Endbereich der Pulverförderkammer (2, 2') angeordnetes Quetschventilgehäuse (15) aufweist, welches lösbar mit dem Endbereich der Pulverförderkammer (2, 2') verbunden oder verbindbar ist, und welches derart ausgebildet ist, dass das Quetschventil (6, 7) austauschbar in dem Quetschventilgehäuse (15) zumindest bereichsweise aufnehmbar ist.

8. Pulverdichtstrompumpe (1) nach Anspruch 7,
wobei das Quetschventilgehäuse (15) einen ersten Bereich (15a) zur insbesondere austauschbaren Aufnahme des Quetschventils (6, 7) und einen gegenüberliegenden zweiten Bereich (15b) aufweist, über den das Quetschventilgehäuse (15) mit dem Mantelkörper (4) der Pulverförderkammer (2, 2') insbesondere steckbar verbindbar ist.

9. Pulverdichtstrompumpe (1) nach Anspruch 7 oder 8,
wobei das Quetschventilgehäuse (15) eine Komponente ist, die mit dem Mantelkörper (4) der Pulverförderkammer (2, 2') lös- oder austauschbar verbindbar ist.

10. Pulverdichtstrompumpe (1) nach einem der Ansprüche 7 bis 9,
wobei das Quetschventil (6, 7) als eine patronen- oder kartuschenartige Komponente ausgeführt ist, die als solche austauschbar in dem Quetschventilgehäuse (15) aufgenommen oder aufnehmbar ist.

11. Pulverdichtstrompumpe (1) nach einem der Ansprüche 7 bis 10,
wobei der zweite Bereich (15b) des Quetschventilgehäuses (15) ausgebildet ist, einen Endbereich des Filterelements (5) der Pulverförderkammer (2, 2') aufzunehmen.

12. Pulverdichtstrompumpe (1) nach Anspruch 11,
wobei die Stützstruktur (19) einen im Hinblick auf die Ventilelement-Längsachse (L) radialen und mittleren Außendurchmesser aufweist, der zumindest im Wesentlichen dem im Hinblick auf die Filterelement-Längsachse radialen und mittleren Innendurchmesser des Filterelements entspricht, wobei sich der mittlere Außendurchmesser der Stützstruktur (19) von dem mittleren Innendurchmesser des Filterelements (5) vorzugsweise um weniger als 10% und noch bevorzugter um weniger als 5% unterscheidet.

13. Quetschventil (6, 7), insbesondere für eine Pulverdichtstrompumpe (1), insbesondere für eine Pulverdichtstrompumpe (1) nach einem der Ansprüche 1 bis 12, wobei das Quetschventil (6, 7) ein zumindest bereichsweise schlauchförmiges Ventilelement (14) aufweist, dessen Umfangswand quer zur Ventilelement-Längsachse (L) zusammenquetschbar ist, um den Durchflussquerschnitt zu verändern, und ferner eine vorzugsweise zumindest im Wesentlichen rohrförmige Stützstruktur (19) aufweist, in welcher das Ventilelement (14) zumindest bereichsweise aufgenommen ist, wobei die Stützstruktur (19) aus mehreren in der Umfangsrichtung der Umfangswand des Ventilelements (14), um die Umfangswand herum aneinander gereihten, jeweils einen bogenförmigen Querschnitt aufweisenden Schalenelementen (20, 20') besteht, die in bezüglich der Ventilelement-Längsachse (L) radialer Richtung außen an das Ventilelement (14) angesetzt sind,
**dadurch gekennzeichnet, dass**
zumindest in einem miteinander verbundenen Zustand der Schalenelemente (20, 20') die Stützstruktur (19) zwischen zwei aneinander angrenzenden Schalenelementen (20, 20') jeweils eine schlitzförmige Öffnung (22) aufweist, durch die hindurch Druckluft als Quetschmittel auf die Umfangswand des Ventilelements (14) einwirken kann, um die Umfangswand des Ventilelements (14) zur Verringerung des zur Verfügung gestellten Durchflussquerschnitts zusammen zu quetschen.

14. Quetschventil (6, 7) nach Anspruch 13,
wobei das Quetschventil (6, 7) als eine patronen- oder kartuschenartige Komponente ausgeführt ist, die als solche austauschbar in einem Quetschventilgehäuse (15) aufgenommen oder aufnehmbar ist.

## Claims

1. A dense phase powder pump (1) for conveying powdery materials, particularly coating powder, wherein the dense phase powder pump (1) comprises at least a powder conveying chamber (2, 2') having a filter element (5) at least partially accommodated in a casing body (4) and at least a pinch valve (6, 7) connected or connectable to an end region of the powder conveying chamber (2, 2'),
**characterized in that**
the pinch valve (6, 7) comprises an at least partly tubular valve element (14), its peripheral wall able to be squeezed transversely to the valve element longitudinal axis (L) in order to change the sectional area of flow, and further comprises a preferably at least substantially tubular support structure (19) in which the valve element (14) is at least partially accommodated, wherein the support structure (19) consists of a plurality of shell elements (20, 20') of arcuate cross section circumferentially aligned one after the other around the peripheral wall of the valve element (14) which are radially positioned to the outside of the valve element (14) relative to the valve element longitudinal axis (L), wherein at least when the shell elements (20, 20') are in an interconnected state, the support structure (19) exhibits a slit-shaped opening (22) between each two adjacent shell elements (20, 20') through which compressed air can act as a squeezing means on the peripheral wall of the valve element (14) in order to squeeze the peripheral wall of the valve element (14) so as to reduce the given sectional area of flow.

2. The dense phase powder pump (1) according to claim 1,
wherein the support structure (19) consists of exactly two shell elements (20, 20'), each having a respective arcuate extension of 180°, wherein the two shell elements (20, 20') have at least one first latching means (21) and at least one second latching means (21) of complementary design to the first latching means (21) via which the two shell elements (20, 20') can be positively and in particular releasably connected together to form the support structure (19).

3. The dense phase powder pump (1) according to claim 2,
wherein the at least one first latching means (21) and the at least one second latching means (21) are formed on the two shell elements (20, 20') - particularly pursuant to the poka-yoke principle - such that the two shell elements (20, 20') can only be connected together in one prespecified orientation.

4. The dense phase powder pump (1) according to one of claims 1 to 3,
wherein the plurality of shell elements (20, 20') are each connected to one another via a respective integral hinge area.

5. The dense phase powder pump (1) according to one of claims 1 to 4,
wherein positively interlocking position setting means (23) are arranged on at least one shell element (20, 20') and the valve element (14) which are designed to specify a circumferential position of the shell elements (20, 20') that is or is to be assumed in the circumferential direction relative to the valve element (14).

6. The dense phase powder pump (1) according to one of claims 1 to 5,
wherein the valve element (14) exhibits a radially projecting flange area (24) on at least one of its two end regions and preferably on both respective end regions, wherein the support structure (19) is axially arranged between the two end regions of the valve element (14) and frontally flanked by them.

7. The dense phase powder pump (1) according to one of claims 1 to 6,
wherein the dense phase powder pump (1) further comprises a pinch valve housing (15) arranged on the at least one end region of the powder conveying chamber (2, 2') which is or is able to be detachably connected to the end region of the powder conveying chamber (2, 2') and which is designed such that the pinch valve (6, 7) can at least in part be replaceably accommodated in the pinch valve housing (15).

8. The dense phase powder pump (1) according to claim 7,
wherein the pinch valve housing (15) has a first region (15a) for the in particular replaceable accommodation of the pinch valve (6, 7) and an oppositely disposed second region (15b) via which the pinch valve housing (15) is connectable to the casing body (4) of the powder conveying chamber (2, 2'), in particular able to plug into same.

9. The dense phase powder pump (1) according to claim 7 or 8,
wherein the pinch valve housing (15) is a component able to be detachably or replaceably connected to the casing body (4) of the powder conveying chamber (2, 2').

10. The dense phase powder pump (1) according to one of claims 7 to 9,
wherein the pinch valve (6, 7) is implemented as a cartridge-like or canister-like component which is or can be replaceably accommodated as such in the pinch valve housing (15).

11. The dense phase powder pump (1) according to one of claims 7 to 10, wherein the second region (15b) of the pinch valve housing (15) is designed to accommodate an end region of the filter element (5) of the powder conveying chamber (2, 2').

12. The dense phase powder pump (1) according to claim 11,
wherein the support structure (19) has a radial and mean outer diameter in relation to the valve element longitudinal axis (L) which at least substantially corresponds to the radial and mean inner diameter of the filter element in relation to the filter element longitudinal axis, wherein the mean outer diameter of the support structure (19) preferably differs from the mean inner diameter of the filter element (5) by less than 10% and even more preferentially by less than 5%.

13. A pinch valve (6, 7), in particular for a dense phase powder pump (1),
particularly for a dense phase powder pump (1) according to one of claims 1 to 12, wherein the pinch valve (6, 7) comprises an at least partly tubular valve element (14), its peripheral wall able to be squeezed transversely to the valve element longitudinal axis (L) in order to change the sectional area of flow, and further comprises a preferably at least substantially tubular support structure (19) in which the valve element (14) is at least partially accommodated, wherein the support structure (19) consists of a plurality of shell elements (20, 20') of arcuate cross section circumferentially aligned one after the other around the peripheral wall of the valve element (14) which are radially positioned to the outside of the valve element (14) relative to the valve element longitudinal axis (L),
**characterized in that**
at least when the shell elements (20, 20') are in an interconnected state, the support structure (19) exhibits a slit-shaped opening (22) between each two adjacent shell elements (20, 20') through which compressed air can act as a squeezing means on the peripheral wall of the valve element (14) in order to squeeze the peripheral wall of the valve element (14) so as to reduce the given sectional area of flow.

14. The pinch valve (6, 7) according to claim 13,
wherein the pinch valve (6, 7) is implemented as a cartridge-like or canister-like component which is or can be replaceably accommodated as such in a pinch valve housing (15).

## Revendications

1. Pompe de flux de poudre en phase dense (1) destinée à refouler des matériaux pulvérulents, en particulier une poudre pour revêtement, dans laquelle la pompe de flux de poudre en phase dense (1) présente au moins une chambre de refoulement de poudre (2, 2') avec un élément de filtre (5) reçu au moins en partie dans un corps enveloppant (4), et au moins une vanne à écrasement (6, 7) raccordée ou pouvant être raccordée à une zone d'extrémité de la chambre de refoulement de poudre (2, 2'),
**caractérisé en ce que**
la vanne à écrasement (6, 7) présente un élément de vanne (14), au moins en partie en forme de flexible, dont la paroi circonférentielle peut être écrasée de manière transversale à l'axe longitudinal d'élément de vanne (L) pour modifier la section de débit, et présente en outre une structure de manchon (19), de préférence au moins sensiblement tubulaire, dans laquelle l'élément de vanne (14) est reçu au moins en partie, et dans laquelle la structure de manchon (19) se compose de plusieurs éléments formant coques (20, 20') présentant chacun une section transversale en forme d'arc dans la direction circonférentielle de la paroi circonférentielle de l'élément de vanne (14), alignés les uns à côté des autres autour de la paroi circonférentielle, qui sont agencés dans la direction radiale par rapport à l'axe longitudinal de l'élément de vanne (L) à l'extérieur au niveau de l'élément de vanne (14), dans laquelle, au moins dans un état où les éléments formant coques (20, 20') sont reliés les uns aux autres, la structure de manchon (19) présente, entre deux éléments formant coques adjacents l'un à l'autre, une ouverture respective en forme de fente (22) à travers laquelle de l'air comprimé, à titre de moyen d'écrasement, peut agir sur la paroi circonférentielle de l'élément de vanne (14) pour écraser la paroi circonférentielle de l'élément de vanne (14) afin de réduire la section de débit disponible.

2. Pompe de flux de poudre en phase dense (1) selon la revendication 1, dans laquelle la structure de manchon (19) se compose précisément de deux éléments formant coques (20, 20') qui présentent chacun une extension arquée de 180°, les deux éléments formant coques (20, 20') présentant au moins un premier moyen d'encliquetage (21) et au moins un second moyen d'encliquetage (21) configuré de manière complémentaire au premier moyen d'encliquetage (21), par l'intermédiaire desquels les deux éléments formant coques (20, 20') peuvent être reliés par coopération de forme et en particulier de manière détachable pour réaliser la structure de manchon (19).

3. Pompe de flux de poudre en phase dense (1) selon la revendication 2,
dans laquelle ledit au moins un premier moyen d'encliquetage (21) et ledit au moins un second moyen d'encliquetage (21) sont réalisés au niveau des deux éléments formant coques (20, 20'), selon un principe anti-erreur dit Poka-Yoke, de telle sorte que les deux éléments formant coques (20, 20') ne peuvent être reliés l'un à l'autre que dans une direction déterminée au préalable.

4. Pompe de flux de poudre en phase dense (1) selon l'une quelconque des revendications 1 à 3,
dans laquelle lesdits plusieurs éléments formant coques (20, 20') sont chacun reliés les uns aux autres par l'intermédiaire d'une zone de charnière film.

5. Pompe de flux de poudre en phase dense (1) selon l'une quelconque des revendications 1 à 4,
dans laquelle, au niveau d'au moins un élément formant coque (20, 20') et de l'élément de vanne (14) sont agencés des moyens de définition de position (23) s'engageant les uns dans les autres par coopération de forme, qui sont réalisés pour définir une position circonférentielle prise ou devant être prise par les éléments formant coques (20, 20') dans la direction circonférentielle par rapport à l'élément de vanne (14).

6. Pompe de flux de poudre en phase dense (1) selon l'une quelconque des revendications 1 à 5,
dans laquelle l'élément de vanne (14) présente, au niveau de l'une au moins de ses deux zones d'extrémité et de préférence au niveau des deux zones d'extrémité, respectivement, une zone de bride en projection radiale (24), la structure de manchon (19) étant agencées axialement entre les deux zones d'extrémité de l'élément de vanne (14) et étant flanquée à l'avant par celles-ci.

7. Pompe de flux de poudre en phase dense (1) selon l'une quelconque des revendications 1 à 6,
dans laquelle la pompe de flux de poudre en phase dense (1) présente en outre un boîtier de vanne à écrasement (15) agencé au niveau de ladite au moins une zone d'extrémité de la chambre de refoulement de poudre (2, 2'), qui est relié ou peut être relié de manière détachable à la zone d'extrémité de la chambre de refoulement de poudre (2, 2'), et qui est réalisé de telle sorte que la vanne à écrasement (6, 7) peut être reçue, au moins en partie, de manière interchangeable dans le boîtier de vanne à écrasement (15).

8. Pompe de flux de poudre en phase dense (1) selon la revendication 7,
dans laquelle le boîtier de vanne à écrasement (15) présente une première zone (15a) destiné à recevoir en particulier de manière interchangeable la vanne à écrasement (6,7), et une seconde zone opposée (15 b) par l'intermédiaire de laquelle le boîtier de vanne à écrasement (15) peut être reliée en particulier de manière enfichable au corps enveloppant (4) de la chambre de refoulement de poudre (2, 2').

9. Pompe de flux de poudre en phase dense (1) selon la revendication 7 ou 8, dans lequel le boîtier de vanne à écrasement (15) est un composant qui peut être relié de manière détachable ou interchangeable au corps enveloppant (4) de la chambre de refoulement de poudre (2, 2').

10. Pompe de flux de poudre en phase dense (1) selon l'une quelconque des revendications 7 à 9,
dans laquelle la vanne à écrasement (6, 7) est conçue comme composant du type à cartouches qui est reçu ou peut être reçu en tant que tel de manière interchangeable dans le boîtier de vanne à écrasement (15).

11. Pompe de flux de poudre en phase dense (1) selon l'une quelconque des revendications 7 à 10,
dans laquelle la seconde zone (15b) du boîtier de vanne à écrasement (15) est réalisée pour recevoir une zone d'extrémité de l'élément de filtre (5) de la chambre de refoulement de poudre (2, 2').

12. Pompe de flux de poudre en phase dense (1) selon la revendication 11, dans laquelle la structure de manchon (19) présente un diamètre extérieur radial et médian, par rapport à l'axe longitudinal de l'élément de vanne (L), qui correspond au moins sensiblement au diamètre intérieur radial et médian de l'élément de filtre, par rapport à l'axe longitudinal d'élément de filtre, le diamètre extérieur médian de la structure de manchon (19) qui de préférence diffère du diamètre intérieur médian de l'élément de filtre (5) de moins de 10 % et, de toute préférence, de moins de 5 %.

13. Vanne à écrasement (6, 7), en particulier pour une pompe de flux de poudre en phase dense (1), en particulier une pompe de flux de poudre en phase dense (1) selon l'une des revendications 1 à 12, dans laquelle la vanne à écrasement (6, 7) présente un élément de vanne (14) au moins en partie en forme de flexible, dont la paroi circonférentielle peut être écrasée de manière transversale à l'axe longitudinal d'élément de vanne (L) pour modifier la section de débit, et présente en outre une structure de manchon (19), de préférence au moins sensiblement tubulaire, dans laquelle l'élément de vanne (14) est reçu au moins en partie, et dans laquelle la structure de manchon (19) se compose de plusieurs éléments formant coques (20, 20') présentant chacun une section transversale en forme d'arc dans la direction circonférentielle de la paroi circonférentielle de l'élément de vanne (14), alignés les uns à côté des autres autour de la paroi circonférentielle, qui sont agencés dans la direction radiale par rapport à l'axe longitudinal de l'élément de vanne (L) à l'extérieur au niveau de l'élément de vanne (14),
**caractérisé en ce que**
au moins dans un état où les éléments formant coques (20, 20') sont reliés les uns aux autres, la structure de manchon (19) présente, entre deux éléments formant coques adjacents l'un à l'autre, une ouverture respective en forme de fente (22) à travers laquelle de l'air comprimé, à titre de moyen d'écrasement, peut agir sur la paroi circonférentielle de l'élément de vanne (14) pour écraser la paroi circonférentielle de l'élément de vanne (14) afin de réduire la section de débit disponible.

14. Vanne à écrasement (6, 7) selon la revendication 13,
dans laquelle la vanne à écrasement (6, 7) est conçue comme composant du type à cartouches qui est reçu ou peut être reçu en tant que tel de manière interchangeable dans un boîtier de vanne à écrasement (15).
